# EUROPÄISCHE PATENTSCHRIFT

(11) **EP 2 865 517 B1**
(45) Veröffentlichungstag und Bekanntmachung des Hinweises auf die Patenterteilung: **09.11.2016**
(21) Anmeldenummer: 14003160.0
(22) Anmeldetag: 12.09.2014
(51) Int. Cl.: B32B 7/00, B32B 7/02, B32B 7/10, B32B 9/00, B32B 9/02, B32B 9/04, B32B 19/00, B32B 19/04, B32B 27/00, B32B 27/06, B32B 27/08, B32B 27/18, B32B 27/28, B32B 27/30, B32B 27/34, B32B 27/36, G06K 19/077

(54) **Verfahren zur Herstellung einer Folie und eines tragbaren Datenträgers**
Method for producing a portable data carrier and film
Procédé de fabrication d'une feuille et d'un support de données portatif

(30) Priorität: 28.10.2013 DE 102013017927
(43) Veröffentlichungstag der Anmeldung: 29.04.2015
(73) Patentinhaber: Giesecke & Devrient GmbH, 81677 München (DE)
(72) Erfinder: Riedl, Josef, 85395 Attenkirchen (DE)

(56) Entgegenhaltungen:
- WO-A1-2005/110773
- WO-A1-2011/012703
- DE-A1- 10 343 196
- DE-A1-102010 009 242

## Beschreibung

Die vorliegende Erfindung beschreibt ein Verfahren zur Herstellung einer Folie und eines tragbaren Datenträgers, welcher aus der Folie hergestellt wird.

Aus dem Stand der Technik sind tragbare Datenträger, wie z.B. eine Chipkarte, eine Dual-Interfacekarte oder eine kontaktlose Karte bekannt. Tragbare Datenträger werden im Stand der Technik mittels Extrusion mindestens einer Kunststoffschicht hergestellt. Die Kunststoffschicht wird gegebenenfalls beschichtet und bedruckt. Die Kunststoffschichten werden durch Lamination mittels Druck und Wärme dauerhaft miteinander verbunden. Als Material für die Kunststofffolien sind Kunststoffe bekannt.

WO 2011/012703 A1 betrifft ein Folienverbundmaterial mit mindestens einer Basisschicht aus einem Basisschichtmaterial, die eine erste Oberfläche und eine zweite Oberfläche aufweist, und einer ersten Deckschicht aus einem ersten Deckschichtmaterial, welche die erste Oberfläche der Basisschicht vollflächig abdeckt. Das Basisschichtmaterial ist ein Polybutylenterephthalatmaterial und das erste Deckschichtmaterial ist ein von dem Basisschichtmaterial verschiedenes Polyestermaterial. Das Folienverbundmaterial kann eine zweite Deckschicht und eine erste Zwischenschicht zwischen der Basisschicht und der ersten Deckschicht, sowie eine zweite Zwischenschicht zwischen der Basisschicht und der zweiten Deckschicht aufweisen. Bevorzugte Materialien für die Basisschicht und die Deckschicht sind Polybutylenterephthalat bzw. Polyethylenterephthalat-Glykol-Copolymer. Die WO-Schrift betrifft auch eine Datenträgerkarte, die das erfindungsgemäße Folienverbundmaterial als Trägerfolie für einen Datenträger aufweist. Die WO-Schrift betrifft ferner Verfahren zur Herstellung des Folienverbundmaterials und der Datenträgerkarte.

WO 2005 / 110 773 A1 betrifft einen mehrlagig ausgebildeten tragbaren Datenträger. Der Datenträger weist eine Kernfolie und wenigstens eine mit der Kernfolie durch Lamination verbundene Deckfolie auf. Die Deckfolie besteht wenigstens zum Teil aus einem Co-Polyester und/oder einem kristallinen, teilkristallinen oder mikrokristallinen Polyester und/oder einem Polycarbonat. Die Besonderheit des Datenträgers besteht darin, dass die Kernfolie wenigstens drei jeweils im Hinblick auf ihre Dicke und/oder ihre Materialzusammensetzung unterschiedlich ausgebildete coextrudierte Schichten aufweist.

DE 103 43 196 A1 betrifft ein Sicherheitselement mit zumindest einem aus einer flexiblen Elektronik bestehenden Schaltkreis. Das Sicherheitselement betrifft auch Datenträger mit einem solchen Sicherheitselement, Verfahren zum Herstellen eines derartigen Sicherheitselements, Verfahren zum Herstellen eines derartigen Datenträgers sowie die Verwendung eines solchen Sicherheitselements und eines solchen Datenträgers.

DE 10 2010 009 242 A1 betrifft ein Folienverbundmaterial, insbesondere zur Verwendung als Schicht in einem Kartenkörper, vorzugsweise in einem Kartenkörper eines tragbaren Datenträgers mit mindestens einer ersten Kunststoff-Außenschicht, mindestens einer Kunststoff-Innenschicht, mindestens einer zweiten Kunststoff-Außenschicht, wobei alle Schichten gemeinsam einen Coextrusionsverbund bilden, wobei der Kunststoff der mindestens einen ersten Außenschicht ein Polyethylenterephthalat-Glykol-Copolymer (PETG) ist oder ein PETG enthält, der Kunststoff der mindestens einen Innenschicht ein thermoplastisches Copolyester-Elastomer (TPC) ist oder ein TPC enthält, der Kunststoff der mindestens einen zweiten Außenschicht ein PETG ist oder ein PETG enthält. Offenbart werden auch ein Verfahren zur Herstellung des Folienverbundmaterials, sowie ein Kartenkörper, der das Folienverbundmateriäl als mindestens eine Schicht in seinem Schichtverbund aufweist, und ein Verfahren zur Herstellung des Kartenkörpers.

Problematisch am Stand der Technik ist, dass ein tragbarer Datenträger eine geringe mechanische Stabilität aufweist. Oftmals ist das Material spröde und reist oder bricht bei Belastung. Ein weiteres Problem stellt die Temperaturbeständigkeit des Datenträgers dar. Ferner bereitet die Beschriftung mittels Laser Probleme. Bei einer Laminierung der Folien oder bei Hotstamp-Anwendungen kommt es immer wieder zu Problemen bei der Haftung von z.B. Kinegrammen. Eine Hochprägung ist teilweise nicht normgerecht, z.B. bei einem Card Quality Management, abgekürzt mit CQM. Eine Bedruckung ist oft nur mit Hilfe eines Hilfsstoffes, wie z.B. eines Primers möglich. Darüber hinaus bereitet die Haftung eines Chipmoduls oder eines Magnetstreifens Probleme.

Ferner ist es ein Problem, dass der Kunststoff eines tragbaren Kartenkörpers aus fossilen Stoffen, wie z.B. Erdöl, hergestellt wird.

Ausgehend von den Nachteilen des Stands der Technik besteht die Aufgabe für die vorliegende Erfindung eine Lösung zu finden, welche die Nachteile des Stands der Technik überwindet.

Die Aufgabe der Erfindung wird durch den unabhängigen und den nebengeordneten Anspruch gelöst. Vorteilhafte Ausführungsbeispiele sind in den Unteransprüchen beschrieben.

Zur Lösung der Aufgabe offenbart die Erfindung ein Verfahren zur Herstellung einer Folie, welches sich dadurch auszeichnet, dass die Folie aus einem nachwachsenden Material Polylactide (PLA) und/oder Polybuthylensuccinat (PBS) hergestellt wird. Das Material sollte möglichst lange Molekülketten aufweisen. Eine lange Molekülkette bedeutet eine hohe Molekülmasse und eine höhere mechanische Stabilität. Eine höhere Molekülmasse steigert die sogenannte Glasübergangs- sowie die Schmelztemperatur, die Zugfestigkeit, das Elastizitätsmodul und senkt die Bruchdehnung. Zur Verlängerung einer Molekülkette können z.B. sogenannte Chain-Extender verwendet werden. Chain-Extender werden z.B. auf Basis von Bio-Adimiden hergestellt. Bio-Adimiden sind Additive, die speziell geeignet sind, um eine Hydrolysebeständigkeit von biobasierten Polyestern, z.B. von Polylactiden, zu verbessern und somit deren Anwendungsbereich zu erweitern.

Ein amorphes und/oder ein zumindest teilweise kristallines Material zur Herstellung verwendet wird. In einem amorphen Material bilden die Atome keine geordneten Strukturen, sondern ein unregelmäßiges Muster. In einem teilweise kristallinen Material sind die Atome sowohl in unregelmäßigen als auch in regelmäßigen Mustern angeordnet.

Die Folie aus mindestens drei Schichten hergestellt wird, wobei
für die mindestens zwei äußeren Schichten ein amorphes Material verwendet wird, und wobei
für die mindestens eine innere Schicht ein zumindest teilweise kristallines Material verwendet wird, dadurch gekennzeichnet,
dass für die mindestens eine innere Schicht ein Enantiomer verwendet wird. Ein Enantiomer ist ein Stereoisomer chemischer Verbindungen, die sich in ihrer Konstitution decken und sich in den räumlichen Strukturen zu einem Gegenstück verhalten, wie dessen nicht deckungsgleiches Spiegelbild. Man nennt sie aufgrund dieser Tatsache auch Spiegelbildisomere.

Ein vorteilhaftes Ausführungsbeispiel ist, dass als Enantiomer ein Racemat verwendet wird. Moleküle, die mindestens ein asymmetrisches Zentrum enthalten und sich wie Bild und Spiegelbild verhalten, gleichen und unterschieden sich wie zwei zusammengehörige Fingerhandschuhe, von denen jeder in der gleichen Weise, nur anders in Bezug auf links und rechts, Raum für einen Daumen und vier Finger gibt. Ein 1:1-Gemisch aus Molekülen, die sich wie Bild und Spiegelbild verhalten, ist ein Racemat.

Ein weiteres vorteilhaftes Ausführungsbeispiel ist, dass als Racemat eine racemische Verbindung verwendet wird. Eine racemische Verbindung ist ein kristallines Racemat, das Enantiomere in einem 1:1-Verhältnis enthält.

Ein weiteres vorteilhaftes Ausführungsbeispiel ist, dass mindestens eine Schicht der Folie einen Impactmodifier enthält. Der Impactmodifier verbessert die mechanischen Eigenschaften eines Materials z.B. in Richtung einer höheren Schlagzähigkeit und einer höheren Elastizität. Beispielsweise kann als Impactmodifier ein Citratester oder Polyethylenglycol, abgekürzt PEG, verwendet werden. Alternativ kann z.B. auch ein Polymerimpactmodifier oder ein Methyl-Methacrylat-Butadien-Styrol oder ein Acryl-Modifikator verwendet werden. Ein Impactmodifier wird geeignet für eine lichtundurchlässige oder lichtdurchlässige Folie ausgewählt.

Ein weiteres vorteilhaftes Ausführungsbeispiel ist, dass mindestens eine Schicht der Folie ein Release enthält. Das Release ist ein Gleitmittel, das verwendet wird um den Herstellungsprozess von Folien zu verbessern und um beim Laminieren der Folie z.B. bei der Herstellung von tragbaren Datenträgern, z.B. von Kreditkarten, ein Anhaften von Folien an Laminierblechen zu verhindern.

Ein weiteres vorteilhaftes Ausführungsbeispiel ist, dass mindestens eine Schicht der Folie ein Laseradditiv enthält. Das Laseradditiv gewährleistet eine Personalisierung einer Folie oder eines tragbaren Datenträgers mittels Laser. Als Laseradditiv bietet sich z.B. ein metallisches Pigment auf Basis einer Kupfer-Molybdän-Verbindung an.

Ein weiteres vorteilhaftes Ausführungsbeispiel ist, dass mindestens eine Schicht der Folie ein Masterbatch enthält. Ein Masterbatch, das auch als Farbgranulat bezeichnet wird, ist ein Kunststoffadditiv in Form eines Granulats mit Gehalten an Farbmitteln oder Additiven, die höher sind als in einer Endanwendung. Beispielsweise enthält ein Masterbatch in hochkonzentrierter Form Titandioxid, zu ca. 50 - 65 %.

Beispielsweise für die Herstellung der Folie ist eine vorteilhafte Ausführungsvariante für Polylactide eine Mischung, die zu einer Hälfte aus einer linksdrehenden Milchsäure und zu einer anderen Hälfte aus einer rechtsdrehenden Milchsäure besteht.

Ein weiteres vorteilhaftes Ausführungsbeispiel ist, dass die Folie lichtdurchlässig oder lichtundurchlässig ist.

Ein weiteres vorteilhaftes Ausführungsbeispiel ist, dass die Folie als Coextrusionsfolie hergestellt wird. Eine Coextrusionsfolie besteht aus mehreren Kunststoffschichten, z.B. drei Schichten, die bei der Herstellung der Folie, z.B. in der Schmelze, miteinander verbunden werden. Eine Coextrusionsfolie besteht aus mindestens einem Material. Die beiden äußersten Schichten einer Coextrusionsfolie werden auch als Siegelschichten bezeichnet.

Ferner offenbart die Erfindung zur Lösung der Aufgabe ein Verfahren zur Herstellung eines tragbaren Datenträgers, welches sich dadurch auszeichnet, dass zur Herstellung des Datenträgers mindestens eine Folie verwendet wird, welche gemäß dem oben beschriebenen Verfahren hergestellt worden ist.

Ein vorteilhaftes Ausführungsbeispiel ist, dass der Datenträger mittels Laminierung ohne Verwendung von Hilfsstoffen, wie z.B. Kleber, Primer hergestellt wird.

Im Folgenden wird die Erfindung anhand der beigefügten Figuren detailliert beschrieben. Elemente mit gleicher Bedeutung weisen die selbe Nummerierung auf.
Figur 1 zeigt ein Ausführungsbeispiel für eine dreischichtige Overlay-Folie.
Figur 2 zeigt ein Ausführungsbeispiel für eine dreischichtige Kernfolie.
Figur 3 zeigt ein alternatives Ausführungsbeispiel für eine dreischichtige Kernfolie.
Figur 4 zeigt ein Ausführungsbeispiel für einen Aufbau eines erfindungsgemäßen tragbaren Datenträgers.
Figur 5 zeigt ein Ausführungsbeispiel für eine alternative Siegelschicht einer dreischichtigen Folie.

Bevor die Figuren diskutiert werden, soll noch kurz auf ein Herstellungsverfahren der Erfindung eingegangen werden. Eine erfindungsgemäße Folie wird beispielsweise mittels eines Co-Extruders mit mindestens zwei Einschneckenextrudern und einem Chill-roll- oder Kalander-Walzenwerk hergestellt. Für das Verfahren sind Temperatur und Materialdurchsatz sehr wichtig, damit das Material, bzw. die erfindungsgemäße Folie nicht thermisch abbaut. Mit der Formulierung thermisch abzubauen ist gemeint, dass wenn eine Materialschmelze zu lange im Extruder verweilt, dann werden die Molekülketten verkürzt und somit die Materialeigenschaften verschlechtert. Die erfindungsgemäße Folie sollte eine Restfeuchte von weniger als 20 ppm aufweisen. Ferner beeinflussen die Walzentemperaturen des Chill-roll- und des Kalander-Walzenwerks die Kristallinität der Folie. Das bedeutet, dass je höher die jeweilige Walzentemperatur ist, desto höher ist die Kristallinität der Folie.

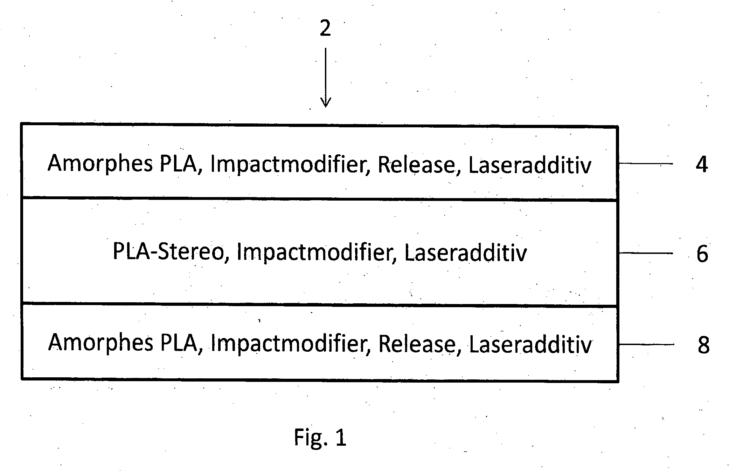

Figur 1 zeigt ein Ausführungsbeispiel für eine mindestens dreischichtige Overlay-Folie 2, z.B. als äußerste Folie eines tragbaren Datenträgers. Die Overlay-Folie 2 umfasst zwei äußere Schichten 4 und 8 und eine innere Schicht 6. Die beiden Schichten 4 und 8 umfassen ein amorphes PLA, das mit einem Impactmodifier, einem Release und einem Laseradditiv ausgestattet ist. Die innere Schicht 6 umfasst ein teilkristallines PLA, als PLA-Stereo bezeichnet, wobei das PLA eine racemische Verbindung darstellt. Die innere Schicht 6 umfasst ferner einen Impactmodifier und ein Laseradditiv. Die Folie 2 hat beispielsweise eine Dicke von 50 bis 250 µm, wobei die Schichten 4 und 8 jeweils eine Dicke von 5 bis 15 µm aufweisen.

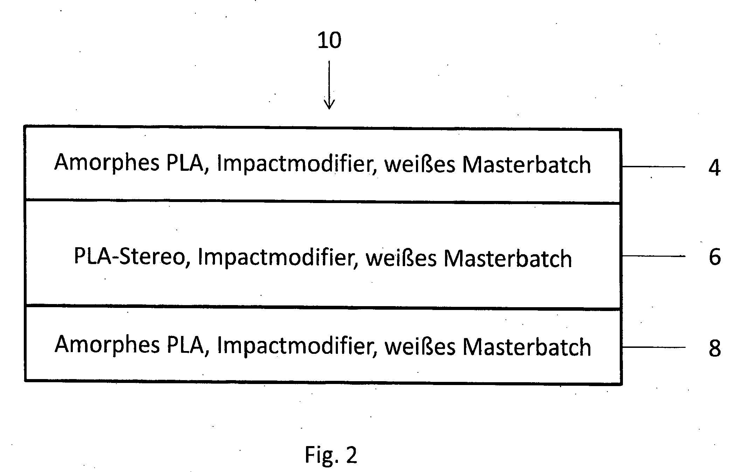

Figur 2 zeigt ein Ausführungsbeispiel für eine mindestens dreischichtige Kernfolie 10. Die Kernfolie 10 umfasst zwei äußere Schichten 4 und 8 und eine innere Schicht 6. Die beiden Schichten 4 und 8 umfassen ein amorphes PLA, das mit einem Impactmodifier und einem weißen Masterbatch ausgestattet ist. Die innere Schicht 6 umfasst ein teilkristallines PLA, als PLA-Stereo bezeichnet, wobei das PLA eine racemische Verbindung darstellt. Die innere Schicht 6 umfasst ferner einen Impactmodifier und ein weißes Masterbatch. Die Folie 10 hat beispielsweise eine Dicke von 100 bis 350 µm, wobei die Schichten 4 und 8 jeweils eine Dicke von 5 bis 25 µm aufweisen.

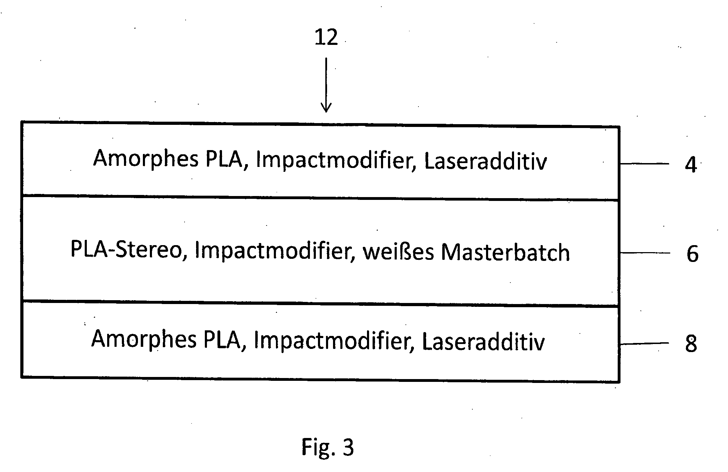

Figur 3 zeigt ein alternatives Ausführungsbeispiel für eine dreischichtige Kernfolie 12. Die Kernfolie 12 umfasst zwei äußere Schichten 4 und 8 und eine innere Schicht 6. Die beiden Schichten 4 und 8 umfassen ein amorphes PLA, das mit einem Impactmodifier, einem Release und einem Laseradditiv ausgestattet ist. Die innere Schicht 6 umfasst ein teilkristallines PLA, als PLA-Stereo bezeichnet, wobei das PLA eine racemische Verbindung darstellt. Die innere Schicht 6 umfasst ferner einen Impactmodifier und ein weißes Masterbatch. Die Folie 12 hat beispielsweise eine Dicke von 100 bis 350 µm, wobei die Schichten 4 und 8 jeweils eine Dicke von 15 bis 40 µm aufweisen. Das Ausführungsbeispiel von Figur 3 zeichnet sich durch eine gute Laserbarkeit aus.

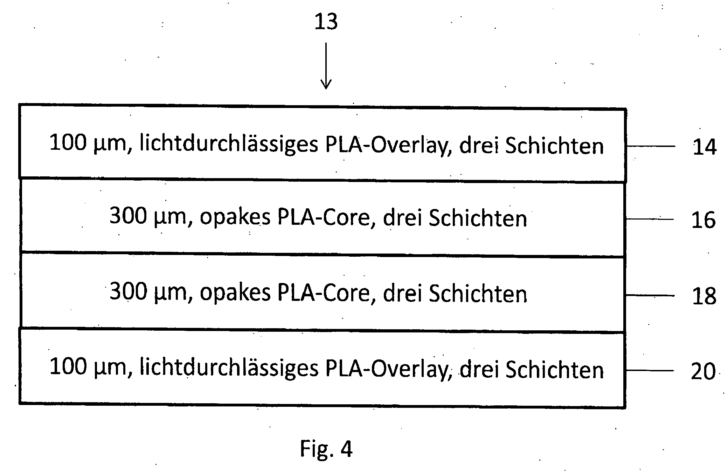

Figur 4 zeigt ein Ausführungsbeispiel für einen Aufbau eines erfindungsgemäßen tragbaren Datenträgers 13. Der Datenträger 13 weist zwei Siegelschichten 14 und 20 auf. Die Siegelschichten 14 und 20 entsprechen beispielsweise einer Overlayfolie, wie sie in Figur 1 dargestellt ist. Alternativ kann es sich bei den Siegelschichten 14 und 20 jeweils um Overlayfolien handeln, welche jeweils auf einer Außenseite eine siegelfähige Schicht haben. Ferner haben die Siegelschichten 14 und 20 jeweils eine Dicke von 100 µm und sind lichtdurchlässig. Neben den beiden Siegelschichten 14 und 20 weist der Datenträger 13 des weiteren zwei innere Folien 16 und 18 auf, die auch als Kernfolien 16 und 18 bezeichnet werden. Die beiden Kernfolien 16 und 18 haben jeweils ein Dicke von 300 µm und sind lichtundurchlässig. Ansonsten entsprechen die Kernfolien 16 und 18 z.B. den Ausführungsbeispielen von Figur 2 oder 3.

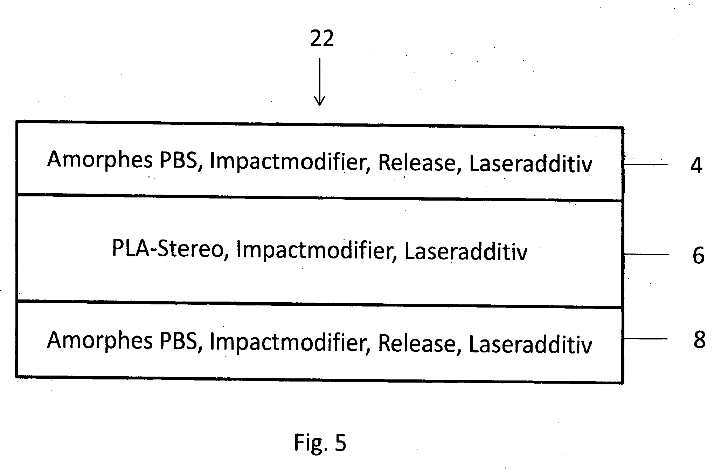

Figur 5 zeigt ein Ausführungsbeispiel für eine alternative Siegelschicht 22, bestehend aus einer mindestens dreischichtigen Folie 22. Die Folie 22 umfasst zwei äußere Schichten 4 und 8 und eine innere Schicht 6. Die beiden Schichten 4 und 8 umfassen ein amorphes PBS, das mit einem Impactmodifier, einem Release und einem Laseradditiv ausgestattet ist. Die innere Schicht 6 umfasst ein teilkristallines PLA, als PLA-Stereo bezeichnet, wobei das PLA eine racemische Verbindung darstellt. Die innere Schicht 6 umfasst ferner einen Impactmodifier und ein Laseradditiv. Wesentlich am Ausführungsbeispiel von Figur 5 ist, dass es möglich ist, dass die Schichten 4 und 8 und die innere Schicht 6 aus unterschiedlichen Materialien bestehen können, vorausgesetzt, dass sie miteinander dauerhaft verbunden werden können.

### Bezugszeichenliste

- 2: eine mindestens dreischichtige Overlay-Folie
- 4: äußere Schicht einer erfindungsgemäßen Folie
- 6: innere Schicht einer erfindungsgemäßen Folie
- 8: äußere Schicht einer erfindungsgemäßen Folie
- 10: Ausführungsbeispiel für eine mindestens dreischichtige Kernfolie
- 12: alternatives Ausführungsbeispiel für eine dreischichtige Kernfolie
- 13: erfindungsgemäßer tragbarer Datenträger, z.B. eine Chipkarte
- 14: Siegelschicht
- 16: innere Folie, z:B. eine Kernfolie
- 18: innere Folie, z.B. eine Kernfolie
- 20: Siegelschicht
- 22: alternatives Ausführungsbeispiel für eine Siegelschicht, z.B. bestehend aus einer Kombination von PBS und PLA

## Patentansprüche

1. Verfahren zur Herstellung einer Folie (2, 10, 12), wobei die Folie aus einem nachwachsenden Material hergestellt wird,
wobei zur Herstellung ein amorphes und/oder ein zumindest teilweise kristallines Material verwendet wird,
wobei die Folie (2, 10, 12) aus mindestens drei Schichten (4, 6, 8) hergestellt wird,
wobei für die mindestens zwei äußeren Schichten (4, 8) ein amorphes Material verwendet wird, wobei für die mindestens eine innere Schicht (6) ein zumindest teilweise kristallines Material verwendet wird,
**dadurch gekennzeichnet, dass** für die mindestens eine innere Schicht (6) ein Enantiomer verwendet wird,
wobei zur Herstellung der Folie (2, 10, 12) als nachwachsendes Material Polylactide und/oder Polybuthylensuccinat verwendet wird.

2. Verfahren nach Anspruch 1, **dadurch gekennzeichnet, dass** als Enantiomer ein Racemat verwendet wird.

3. Verfahren nach Anspruch 2, **dadurch gekennzeichnet, dass** als Racemat eine racemische Verbindung verwendet wird.

4. Verfahren nach einem der vorhergehenden Ansprüche 1 bis 3, **dadurch gekennzeichnet, dass** mindestens eine Schicht (4, 6, 8) der Folie (2, 10, 12) einen Impactmodifier enthält.

5. Verfahren nach einem der vorhergehenden Ansprüche 1 bis 4, **dadurch gekennzeichnet, dass** mindestens eine Schicht (4, 6, 8) der Folie (2, 10, 12) ein Release enthält.

6. Verfahren nach einem der vorhergehenden Ansprüche 1 bis 5, **dadurch gekennzeichnet, dass** mindestens eine Schicht (4, 6, 8) der Folie (2, 10, 12) ein Laseradditiv enthält.

7. Verfahren nach einem der vorhergehenden Ansprüche 1 bis 6, **dadurch gekennzeichnet, dass** mindestens eine Schicht (4, 6, 8) der Folie (2, 10, 12) ein Masterbatch enthält.

8. Verfahren nach einem der vorhergehenden Ansprüche 1 bis 7, **dadurch gekennzeichnet, dass** die Folie (2, 10, 12) lichtdurchlässig oder lichtundurchlässig ist.

9. Verfahren zur Herstellung eines tragbaren Datenträgers (13), **dadurch gekennzeichnet, dass** zur Herstellung des Datenträgers (13) mindestens eine Folie (2, 10, 12) verwendet wird, welche gemäß den Ansprüchen 1 bis 8 hergestellt wird.

## Claims

1. A method for producing a foil (2, 10, 12), wherein the foil is produced from a renewable material,
wherein an amorphous and/or an at least partially crystalline material is employed for producing,
wherein the foil (2, 10, 12) is produced of at least three layers (4, 6, 8),
wherein an amorphous material is employed for the at least two outer layers (4, 8), wherein an at least partially crystalline material is employed for the at least one inner layer (6), **characterized in that** an enantiomer is employed for the at least one inner layer (6), wherein for producing the foil (2, 10, 12) polylactides and/or polybutylene succinate are employed as renewable material.

2. The method according to claim 1, **characterized in that** a racemate is employed as enantiomer.

3. The method according to claim 2, **characterized in that** a racemic compound is employed as the racemate.

4. The method according to any of the preceding claims 1 to 3, **characterized in that** at least one layer (4, 6, 8) of the foil (2, 10, 12) contains an impact modifier.

5. The method according to any of the preceding claims 1 to 4, **characterized in that** at least one layer (4, 6, 8) of the foil (2, 10, 12) contains a release.

6. The method according to any of the preceding claims 1 to 5, **characterized in that** at least one layer (4, 6, 8) of the foil (2, 10, 12) contains a laser additive.

7. The method according to any of the preceding claims 1 to 6, **characterized in that** at least one layer (4, 6, 8) of the foil (2, 10, 12) contains a master batch.

8. The method according to any of the preceding claims 1 to 7, **characterized in that** the foil (2, 10, 12) is light-transmissive or light-non-transmissive.

9. A method for producing a portable data carrier (13), **characterized in that** for the production of the data carrier (13) at least one foil (2, 10, 12) is employed that is produced in accordance with the claims 1 to 8.

## Revendications

1. Procédé de fabrication d'un film (2, 10,12), le film étant fabriqué à partir d'un matériau renouvelable,
cependant que, pour la fabrication, un matériau amorphe et/ou au moins partiellement cristallin est utilisé,
cependant que le film (2, 10,12) est fabriqué à partir d'au moins trois couches (4, 6, 8),
cependant que, pour les au moins deux couches extérieures (4, 8), un matériau amorphe est utilisé, cependant que, pour la au moins une couche intérieure (6), un matériau au moins partiellement cristallin est utilisé,
**caractérisé en ce que,** pour la au moins une couche intérieure (6), un énantiomère est utilisé, cependant que, pour la fabrication du film (2, 10,12), en tant que matériau renouvelable, du polylactide et/ou du succinate de polybutylène est utilisé.

2. Procédé selon la revendication 1, **caractérisé en ce que,** en tant qu'énantiomère, un racémate est utilisé.

3. Procédé selon la revendication 2, **caractérisé en ce que,** en tant que racémate, un composé racémique est utilisé.

4. Procédé selon une des revendications précédentes de 1 à **3, caractérisé en ce qu'**au moins une couche (4, 6, 8) du film (2, 10,12) contient un modificateur d'impact.

5. Procédé selon une des revendications précédentes de 1 à 4, **caractérisé en ce qu'**au moins une couche (4, 6, 8) du film (2, 10,12) contient un agent de décollement.

6. Procédé selon une des revendications précédentes de 1 à 5, **caractérisé en ce qu'**au moins une couche (4, 6, 8) du film (2, 10,12) contient un additif laser.

7. Procédé selon une des revendications précédentes de 1 à 6, **caractérisé en ce qu'**au moins une couche (4, 6, 8) du film (2, 10,12) contient un mélange maître.

8. Procédé selon une des revendications précédentes de 1 à 7, **caractérisé en ce que** le film (2, 10,12) est perméable ou non perméable à la lumière.

9. Procédé de fabrication d'un support de données (13) portable, **caractérisé en ce que,** pour la fabrication du support de données (13), au moins un film (2, 10,12) est utilisé, lequel est fabriqué conformément à une des revendications de 1 à 8.
